Europäisches Patentamt

European Patent Office

Office européen des brevets

(19)

(11) **EP 1 022 680 A1**

(12) **DEMANDE DE BREVET EUROPEEN**

(43) Date de publication:
26.07.2000 Bulletin 2000/30

(51) Int. Cl.⁷: $G06T\ 7/00$, $G06K\ 9/46$

(21) Numéro de dépôt: 00390002.4

(22) Date de dépôt: 19.01.2000

(84) Etats contractants désignés:
AT BE CH CY DE DK ES FI FR GB GR IE IT LI LU
MC NL PT SE
Etats d'extension désignés:
AL LT LV MK RO SI

(30) Priorité: 22.01.1999 FR 9900718

(71) Demandeur:
INTERMEC SCANNER TECHNOLOGY CENTER
Société Anonyme
31676 Labège Cédex (FR)

(72) Inventeurs:
• El Akel, Khalid
31320 Castanet (FR)

• Dumontier, Christophe
31320 Castanet (FR)
• Reuze, Patrick
31500 Toulouse (FR)
• Thuries, Serge
31240 Saint Jean (FR)
• Puech, Jean-Michel
31400 Toulouse (FR)
• Massieu, Jean-Louis
82000 Montauban (FR)

(74) Mandataire:
Cabinet BARRE LAFORGUE & associés
95, rue des Amidonniers
31000 Toulouse (FR)

(54) **Procédé et dispositif de detection de segments de droites dans un flot de données numériques répresentatives d'une image, dans lequel sont identifiés les points contours de ladite image**

(57) L'invention concerne un procédé de détection de segments de droites dans un flot de données numériques représentatives d'une image (m,n) dans lequel sont identifiés les points contours de ladite image définis chacun par le module et l'orientation θ de leur gradient par rapport à un axe horizontal. Selon ce procédé, on mémorise le flot de données numériques sous la forme de deux lignes successives de n points P(i,j) chacune, pour chacune des lignes, on extrait successivement les n points de ladite ligne, et pour chaque point Pc(i,j) extrait, dit point courant, on extrait les trois points de coordonnées inférieures Pa(i-1,j-1),Pb(i,j-1), Pd(i-1,j) voisins directs dudit point courant, on compare successivement la valeur de l'orientation du point courant Pc avec celle des points voisins Pa, Pb et Pd, et les valeurs des orientations des points Pb et Pd, on valide le résultat d'une comparaison si les points sont des points contours, et si les valeurs de leur orientation sont proches. De plus, lorsque le résultat d'une comparaison est validé, on recopie les coordonnées du point de coordonnées inférieures de la connexion dans celles du point de coordonnées supérieures, on vérifie si seul le point Pa(i-1,j-1) est un point contour parmi les quatre points Pa, Pb, Pc, Pd extraits, et dans l'affirmative, on sauvegarde les coordonnées du point origine et du point final, et l'orientation du segment de droite si sa taille est supérieure à un seuil prédéterminé.

Fig 2

**EP 1 022 680 A1**

## Description

L'invention concerne un procédé de détection de segments de droites dans un flot de données numériques représentatives d'une image de dimension (m,n) et de taille T=mxn , dans lequel sont identifiés les points contours de ladite image définis chacun par le module et l'orientation de leur gradient par rapport à un axe horizontal. Elle s'étend à un dispositif de détection de segments de droite pour la mise en oeuvre de ce procédé de détection.

L'objectif principal de l'invention est de fournir un procédé de détection de segments de droites permettant de traiter avec une cadence très élevée des données numériques représentatives d'une image haute résolution, et adapté pour délivrer les coordonnées de début et de fin et l'orientation de chacun desdits segments de droites.

Un tel procédé s'applique notamment pour la détection de segments de droites dans un flot de données numériques représentatives d'images de codes à une et deux dimensions formées sur un capteur électronique tel qu'une matrice photosensible. A cet effet il est notamment destiné à être mis en oeuvre dans un dispositif de détection intégré dans un sous-module de traitement formant un sous-ensemble de moyens d'acquisition et de traitement d'images de codes formées sur une matrice photosensible, tels que décrits dans la demande de brevet français déposée au nom de la demanderesse conjointement à la présente demande, ledit sous-module de traitement réalisé au moyen d'opérateurs câblés comprenant en amont dudit dispositif de détection :

-   un circuit de sous-échantillonnage apte à réduire la taille T de l'image formée sur la matrice photosensible, par exemple en divisant ladite taille T selon la méthode pyramidale de BURT, de façon à obtenir une image de taille réduite T/4 puis T/16,
-   un circuit de détection des contours dans l'image réduite issue du circuit de sous-échantillonnage, adapté pour délivrer des images desdits contours dans lesquelles les points contours sont définis par le module et l'orientation de leur gradient par rapport à un axe horizontal, ledit gradient représentant l'amplitude du contraste entre deux points. Ces points contours sont par exemple déterminés en calculant les gradients par application de la méthode des masques de ROBERTS dans les directions horizontale et verticale, et en retenant comme points contours les seuls points dont le module du gradient est supérieur à un seuil prédéterminé et maximum dans la direction dudit gradient définie par l'argument de ce dernier, les autres points étant considérés comme n'appartenant pas à un contour et étant par exemple identifiés par une valeur telle que -1 de l'orientation de leur gradient.

Un autre objectif de l'invention est de fournir, pour chaque image, un histogramme des orientations des différents segments de droite détectés.

En vue de remplir l'objectif principal précité, le procédé de détection de segments de droites selon l'invention se caractérise en ce qu'on mémorise le flot de données numériques sous la forme de deux lignes successives de n points P(i,j) chacune, avec $1 \leq i \leq m$ et $1 \leq j \leq n$, et pour chacune des lignes, on extrait successivement les n points de ladite ligue et pour chaque point Pc(i,j) extrait, dit point courant :

-   on extrait les trois points de coordonnées inférieures Pa(i-1,j-1), Pb(i,j-1), Pd(i-1,j) voisins directs dudit point courant,
-   on compare successivement les valeurs de l'orientation du gradient du point courant Pc avec celle des points voisins Pa, Pb, et Pd, et les valeurs des orientations des gradients des points Pb et Pd,
-   on valide le résultat d'une comparaison, représentatif d'une connexion entre deux points, si lesdits points sont des points contours, et si la différence entre les valeurs de l'orientation de leur gradient est inférieure ou égale à une valeur k prédéterminée,
-   lorsque le résultat d'une comparaison est validé, on recopie les coordonnées du point de coordonnées inférieures de la connexion, dit point de début, dans celles du point de coordonnées supérieures, dit point de fin, de ladite connexion, et l'on efface de la mémoire les coordonnées du point de début sauf si ce dernier a été identifié comme étant un point origine d'un segment de droite.

    .   on vérifie si seul le point Pa (i-1,j-1) est un point contour parmi les quatre points Pa, Pb, Pc, Pd extraits, et dans l'affirmative, on calcule la taille du segment de droite dont ledit point Pa est le point final, et on sauvegarde lies coordonnées du point origine et du point final, et l'orientation dudit segment de droite si sa taille est supérieure à un seuil prédéterminé.

Ce procédé travaille donc à partir de mémoires lignes correspondant à des lignes successives de l'image et permettant de balayer de haut en bas l'intégralité de ladite image, lesdites mémoires d'une part contenant le résultat de la détection de contours, c'est-à-dire pour chaque point la valeur de l'orientation de son gradient (égale à une valeur donnée si le point est un point contour et à -1 dans le cas contraire), et d'autre part, servant à inscrire les coordonnées des extrémités, point origine et point final, et l'orientation des segments de droite.

De plus, l'obtention d'une série de segments de droites à partir d'un contour consiste à suivre ce contour du point "le plus haut" jusqu'au point "le plus bas" de ce dernier, et à décider, en premier lieu, pour chaque point P(i,j) contenant un contour, si P appartient à un segment S voisin constitué lui-même de un ou plusieurs points contours. Ensuite, si P appartient au segment S, l'extrémité finale de ce segment prend pour coordonnées celles de P, c'est-à-dire (i,j), l'extrémité origine dudit segment restant inchangée et les coordonnées des points intermédiaires éventuels étant effacées. Par contre, si P n'appartient pas à ce segment, il définit alors l'origine d'un nouveau segment dont les deux extrémités sont égales à (i,j), dont la taille est égale à 1 et dont l'orientation est θP.

Un tel procédé de détection a pour avantage de permettre de traiter avec une cadence élevée, équivalente par exemple à la fréquence pixel à laquelle des données représentatives d'images sont délivrées par une matrice photosensible, des données numériques représentatives des contours d'images haute résolution.

Selon un mode de mise en oeuvre préférentiel visant le traitement de segment de droites horizontaux ou sensiblement horizontaux :

- lors de la validation d'une première connexion entre deux points voisins P(i-1,j), P(i,j) d'une même ligne, représentative d'un segment initial de droite horizontal, on remplace les coordonnées du point de début de la connexion par celles du point de fin de ladite connexion, et inversement celles du point de fin par celles du point de début.
- puis, pour tout point P(i+x,j) de ladite ligne connecté au segment de droite initial, on remplace les coordonnées dudit point par les coordonnées initiales (i-1,j) du point origine du segment initial de droite horizontal et les coordonnées dudit point origine par celles (i+x,j) dudit point.

De plus, et de façon avantageuse, lors de la validation de la connexion entre un point P(i,j) avec un point P(i-1,j-1) ou P(i+1,j-1) validé comme un point d'extrémité, origine ou final, d'un segment de droite horizontal, les coordonnées dudit point P(i,j) sont transférées dans celles du point d'extrémité opposée, final ou origine, dudit segment de droite, et celles dudit point d'extrémité opposée dans celles dudit point P(i,j).

Selon ces dispositions, dans le cas de segments de droites horizontaux ou sensiblement horizontaux, les deux extrémités desdits segments sont mises à jour car ces dernières sont toutes deux susceptibles d'être connectées à un autre segment de taille supérieure ou égale à un traité dans la ligne suivante. De ce fait, le procédé selon l'invention permet de connecter deux segments horizontaux, les coordonnées des extrémités voisines de ces segments étant effacées, tandis que les coordonnées des extrémités opposées desdits segments étant transférées réciproquement d'une extrémité dans l'autre.

De plus, le procédé permet également, de même, de connecter un segment de droite horizontal avec un point contour, les coordonnées dudit point contour et celles de l'extrémité du segment de droite opposée audit point contour étant transférées de façon réciproque.

Par ailleurs, on calcule avantageusement l'histogramme des orientations des différents segments de droites détectés dans l'image.

A titre d'exemple, un tel histogramme des orientations présente notamment un intérêt dans le cas de la lecture de codes à une dimension composé de barres parallèles car il présente alors un pic correspondant à la valeur θ de l'angle entre l'horizontale et l'axe desdites barres parallèles. De ce fait, l'obtention de données représentatives du code est obtenue aisément en effectuant une "lecture" dudit code selon une ligne orthogonale à celle définie par l'angle θ.

Un tel histogramme présente également un intérêt dans le cadre de codes à deux dimensions présentant une signature spécifique tels que par exemple les codes DATAMATRIX délimités par deux lignes droites orthogonales de même longueur. Dans ce cas, un tel code est aisément identifié par vérification des deux hypothèses suivantes : tailles des deux segments de droites identiques et différence des valeurs des orientations correspondant aux pics de l'histogramme égale sensiblement à 90°.

Selon une autre caractéristique de l'invention, les points contours de l'image (m,n) initiale sont définis par des valeurs de l'orientation du gradient comprises entre 0 et 15 obtenues par une division du cercle trigonométrique en 16 secteurs égaux, et représentatives chacune d'une position angulaire comprise dans un desdits secteurs.

Sur la base de ces valeurs, on valide, en outre, préférentiellement, une connexion entre deux points contours au moyen du tableau ci-après :

l'utilisation du tableau consistant, d'une part à déclarer valide la connexion lorsque la donnée dans ledit tableau correspondant à l'intersection des valeurs θ1, θ2 des orientations des deux points contours est différente de -1, et d'autre part, à conférer au point de fin de la connexion une valeur d'orientation égale à celle de ladite donnée.

Selon une autre caractéristique de l'invention, on mémorise le flot de données numériques dans une mémoire comportant trois blocs-mémoires d'une capacité de n points chacun, aptes à permettre par permutation circulaire desdits blocs-mémoires, le stockage de n points dans un bloc-mémoire, et simultanément le traitement des données renfermées dans les deux autres blocs-mémoires.

L'invention s'étend à un dispositif de détection de segments de droites dans un flot de données numériques délivrées avec une fréquence pixel et représentatives d'une image (m,n), dans lequel sont identifiés les points contours de ladite image. Selon l'invention, ce dispositif de détection comprend :

- des moyens de mémorisation du flot de données numériques sous forme de lignes successives de n données chacune,
- un circuit-tampon comprenant :

  . des registres de lecture successive des données numériques à traiter,
  . des registres de mémorisation des résultats du traitement des données numériques représentatifs des coordonnées des points d'extrémité et de l'orientation des segments de droite,
  . et des registres de travail,

- un module de gestion recevant un signal d'horloge représentatif de la fréquence pixel de délivrance des données numériques, ledit module de gestion étant relié aux moyens de mémorisation et au circuit-tampon, et étant adapté d'une part, pour gérer le remplissage et le traitement à la fréquence pixel des données numériques dans les moyens de mémorisation, et d'autre part, l'échange réciproque de données entre lesdits moyens de mémorisation et le circuit-tampon,
- un module de calcul programmé pour effectuer des tests destinés au traitement des données numériques dans les registres de lecture,
- et un séquenceur recevant un signal d'horloge représentatif de la fréquence pixel et adapté, en fonction des résultats délivrés par le module de calcul, pour commander le module de gestion et le circuit-tampon en vue des transferts de données entre ledit circuit-tampon et les moyens de mémorisation.

De plus, et de façon avantageuse, les moyens de mémorisation comprennent trois blocs-mémoires aptes à mémoriser chacun une ligne de n données numériques, le module de gestion étant adapté pour commander une permutation circulaire desdits blocs mémoires apte à permettre le stockage n données dans un bloc-mémoire, et simultanément, le traitement des données renfermées dans les deux autres blocs-mémoires.

Par ailleurs, ce dispositif de détection comprend avantageusement un module de calcul recevant les résultats mémorisés dans les registres de mémorisation, représentatifs des orientations des segment de droites détectés, et programmé pour calculer l'histogramme desdites orientations.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins :

- la figure 1 représente l'algorithme de traitement des données numériques mis en oeuvre selon l'invention,
- la figure 2 représente les quatre configurations possibles de connexion entre quatre points voisins, testées lors du traitement de chaque point,
- la figure 3 est un schéma synoptique d'un dispositif de détection de segments de droites conforme à l'invention,
- les figures 4a et 4b illustrent un exemple de connexion classique entre un segment de droite et un point contour,
- les figures 5a, 5b et 6a, 6b illustrent respectivement deux exemples de connexion entre un segment de droite horizontal et un point contour,
- et les figures 7a et 7b illustrent un exemple de connexion entre deux segments de droites horizontaux.

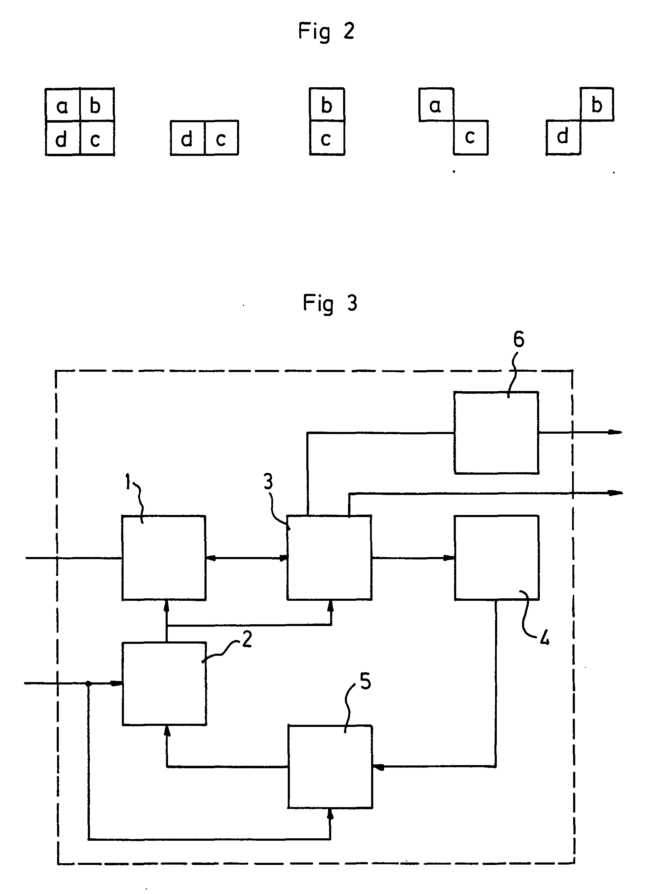

Le dispositif de détection de segments de droites conforme à l'invention représenté à la figure 3 est adapté pour traiter un flot de données numériques délivrées avec une fréquence pixel, représentatives d'une image (m,n), dans lequel sont identifiés les points contours de ladite image.

De façon classique, l'image (m,n) est une image réduite, normalement de taille T/16, de l'image formée sur une matrice photosensible, obtenue selon la méthode pyramidale de BURT.

De plus, les points contours de cette image sont définis par le module et l'orientation par rapport à un axe horizontal de leur gradient, ledit gradient représentant l'amplitude du contraste entre deux points. Ces points contours sont classiquement déterminés selon la méthode des masques de ROBERTS, en retenant comme points contours les seuls points dont le module du gradient est supérieur à un seuil prédéterminé et maximum dans la direction dudit gradient définie par l'argument de ce dernier, les autres points étant considérés comme n'appartenant pas à un contour et étant identifiés par une valeur égale à -1 de l'orientation de leur gradient.

De plus, les orientations des gradients des points contours présentent des valeurs comprises entre 0 et 15 obtenues par une division du cercle trigonométrique en 16 secteurs égaux de 22,5 degrés chacun, chacune desdites valeurs correspondant à une orientation par rapport à un axe horizontal comprise dans le secteur correspondant.

Le dispositif de détection selon l'invention comprend, en premier lieu, des moyens 1 de mémorisation du flot de données numériques comportant trois blocs-mémoires d'une capacité de n points, aptes par conséquent a mémoriser chacun l'ensemble des n points de chaque ligne de l'image (m, n), lesdits blocs-mémoires étant adaptés pour qu'un bloc-mémoire soit dédié au stockage d'une ligne de données numériques, et les deux autres blocs-mémoires dédiés au traitement des deux lignes de données préalablement stockées.

Le dispositif de détection comprend, en outre, un module de gestion 2 recevant un signal d'horloge pixel lui fournissant une information concernant le nombre de données numériques délivré vers les moyens de mémorisation 1. Sur la base de cette information, ce module de gestion 2 est adapté, en premier lieu, pour gérer l'ensemble des signaux de contrôle nécessaires au fonctionnement des moyens de mémorisation 1, et commander une permutation circulaire des blocs-mémoires.

Le dispositif de détection comprend également un circuit-tampon 3 composé de dix registres dont les affectations respectives sont les suivantes :

- quatre registres pour la lecture de quatre points utilisés lors du traitement tel que décrit ci-après,
- trois registres de mémorisation des résultats du traitement, à savoir coordonnées du point origine et du point final et orientation de chaque segment de droite,
- trois registres de travail de mémorisation temporaire des données utilisées lors du traitement.

Le dispositif de détection comprend, par ailleurs, un module de calcul 4 adapté pour effectuer les tests nécessaires au traitement des données numériques, décrits en détail ci-dessous.

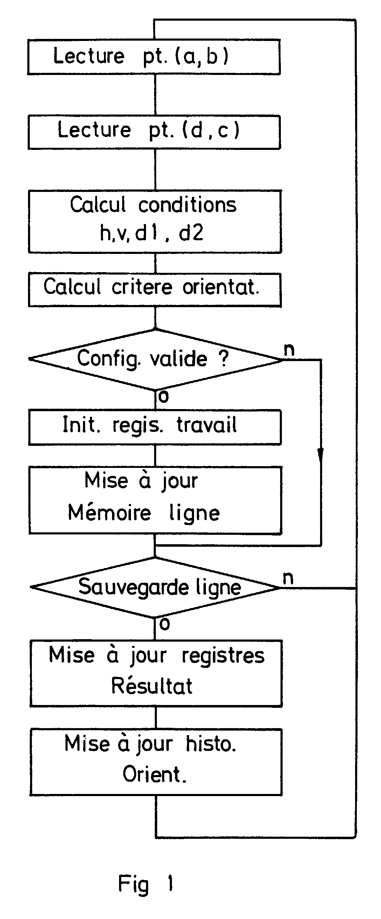

Le dispositif de détection comprend, en outre, un séquenceur 5 conçu pour mettre en oeuvre l'algorithme représenté à la figure 1, avec une cadence assurée par l'horloge pixel auquel est relié à cet effet ledit séquenceur.

En vue de la mise en oeuvre de l'algorithme, ce séquenceur 5 est, en premier lieu, relié au module de calcul 4 de façon à récupérer les tests effectués par ce dernier. Il est de plus relié au module de gestion 2 en vue de commander le transfert des données numériques des moyens de mémorisation 1 vers le circuit-tampon 3, et inversement le transfert des données de travail contenus dans le circuit-tampon vers les moyens de mémorisation 1.

L'algorithme proprement dit mis en oeuvre par le séquenceur 5 consiste, en premier lieu, pour chaque point courant à traiter Pc(i,j) à lire ledit point et les trois points voisins Pa(i-1,j-1), Pb(i,j-1) et Pd(i-1,j) de coordonnées inférieures, qui sont transférés dans les registres de lecture.

Les premiers tests effectués sur ces quatre points consistent à déterminer si une connexion entre deux de ces points est effective selon l'une des configurations représentées à la figure 2. A cet effet, et pour chacune de ces configurations, on vérifie si les valeurs des orientations des deux points concernés, lorsque ces derniers sont des points contours, sont proches. Pour ce faire, on utilise le tableau ci-après, et on déclare valide la connexion si la valeur dudit tableau correspondant à l'intersection des valeurs θ1, θ2 des orientations des deux points contours traités est différente de -1. Il est à noter que les valeurs de ce tableau peuvent être obtenues, de façon classique, soit par l'intermédiaire d'une table mémorisée, soit par la résolution d'équations logiques.

| θ2\θ1 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| 0 | 00 | 16 | -1 | -1 | -1 | -1 | -1 | -1 | -1 | -1 | -1 | -1 | -1 | -1 | 46 | 31 | 32 | -1 | -1 | -1 | -1 | -1 | -1 | -1 | -1 | -1 | -1 | -1 | -1 | -1 | 46 | 31 | 32 | -1 | -1 | -1 | -1 | -1 | -1 | -1 | -1 | -1 | -1 | -1 | -1 | -1 | 46 | 47 |
| 1 | 16 | 01 | 17 | 33 | -1 | -1 | -1 | -1 | -1 | -1 | -1 | -1 | -1 | -1 | 31 | 47 | 16 | 32 | -1 | -1 | -1 | -1 | -1 | -1 | -1 | -1 | -1 | -1 | -1 | -1 | 31 | 47 | 32 | -1 | -1 | -1 | -1 | -1 | -1 | -1 | -1 | -1 | -1 | -1 | -1 | 45 | 46 | 47 |
| 2 | 32 | 17 | 02 | 18 | 34 | -1 | -1 | -1 | -1 | -1 | -1 | -1 | -1 | -1 | 47 | -1 | 16 | 17 | 33 | -1 | -1 | -1 | 32 | 17 | 18 | 34 | -1 | -1 | -1 | -1 | -1 | 47 | 32 | 33 | 34 | -1 | -1 | -1 | -1 | -1 | -1 | -1 | -1 | -1 | -1 | -1 | -1 | -1 |
| 3 | -1 | 33 | 18 | 03 | 19 | 35 | -1 | -1 | -1 | -1 | -1 | -1 | -1 | -1 | -1 | -1 | 32 | 17 | 18 | 34 | -1 | -1 | -1 | -1 | -1 | -1 | -1 | -1 | -1 | -1 | -1 | -1 | -1 | 33 | 34 | 35 | -1 | -1 | -1 | -1 | -1 | -1 | -1 | -1 | -1 | -1 | -1 | -1 |
| 4 | -1 | -1 | 34 | 19 | 04 | 20 | 36 | -1 | -1 | -1 | -1 | -1 | -1 | -1 | -1 | -1 | -1 | 33 | 18 | 19 | 35 | -1 | -1 | -1 | -1 | -1 | -1 | -1 | -1 | -1 | -1 | -1 | -1 | -1 | 34 | 35 | 36 | -1 | -1 | -1 | -1 | -1 | -1 | -1 | -1 | -1 | -1 | -1 |
| 5 | -1 | -1 | -1 | 35 | 20 | 05 | 21 | 37 | -1 | -1 | -1 | -1 | -1 | -1 | -1 | -1 | -1 | -1 | 34 | 19 | 20 | 36 | -1 | -1 | -1 | -1 | -1 | -1 | -1 | -1 | -1 | -1 | -1 | -1 | -1 | 35 | 36 | 37 | -1 | -1 | -1 | -1 | -1 | -1 | -1 | -1 | -1 | -1 |
| 6 | -1 | -1 | -1 | -1 | 36 | 21 | 06 | 22 | 38 | -1 | -1 | -1 | -1 | -1 | -1 | -1 | -1 | -1 | -1 | 35 | 20 | 21 | 37 | -1 | -1 | -1 | -1 | -1 | -1 | -1 | -1 | -1 | -1 | -1 | -1 | -1 | 36 | 37 | 38 | -1 | -1 | -1 | -1 | -1 | -1 | -1 | -1 | -1 |
| 7 | -1 | -1 | -1 | -1 | -1 | 37 | 22 | 07 | 23 | 39 | -1 | -1 | -1 | -1 | -1 | -1 | -1 | -1 | -1 | -1 | 36 | 21 | 22 | 38 | -1 | -1 | -1 | -1 | -1 | -1 | -1 | -1 | -1 | -1 | -1 | -1 | -1 | 37 | 38 | 39 | -1 | -1 | -1 | -1 | -1 | -1 | -1 | -1 |
| 8 | -1 | -1 | -1 | -1 | -1 | -1 | 38 | 23 | 08 | 24 | 40 | -1 | -1 | -1 | -1 | -1 | -1 | -1 | -1 | -1 | -1 | 37 | 22 | 23 | 39 | -1 | -1 | -1 | -1 | -1 | -1 | -1 | -1 | -1 | -1 | -1 | -1 | -1 | 38 | 39 | 40 | -1 | -1 | -1 | -1 | -1 | -1 | -1 |
| 9 | -1 | -1 | -1 | -1 | -1 | -1 | -1 | 39 | 24 | 09 | 25 | 41 | -1 | -1 | -1 | -1 | -1 | -1 | -1 | -1 | -1 | -1 | 38 | 23 | 24 | 40 | -1 | -1 | -1 | -1 | -1 | -1 | -1 | -1 | -1 | -1 | -1 | -1 | -1 | 39 | 40 | 41 | -1 | -1 | -1 | -1 | -1 | -1 |
| 10 | -1 | -1 | -1 | -1 | -1 | -1 | -1 | -1 | 40 | 25 | 10 | 26 | 42 | -1 | -1 | -1 | -1 | -1 | -1 | -1 | -1 | -1 | -1 | 39 | 24 | 25 | 41 | -1 | -1 | -1 | -1 | -1 | -1 | -1 | -1 | -1 | -1 | -1 | -1 | -1 | 40 | 41 | 42 | -1 | -1 | -1 | -1 | -1 |
| 11 | -1 | -1 | -1 | -1 | -1 | -1 | -1 | -1 | -1 | 41 | 26 | 11 | 27 | 43 | -1 | -1 | -1 | -1 | -1 | -1 | -1 | -1 | -1 | -1 | 40 | 26 | 42 | 43 | -1 | -1 | -1 | -1 | -1 | -1 | -1 | -1 | -1 | -1 | -1 | -1 | -1 | 41 | 42 | 43 | -1 | -1 | -1 | -1 |
| 12 | -1 | -1 | -1 | -1 | -1 | -1 | -1 | -1 | -1 | -1 | 42 | 27 | 12 | 28 | 44 | -1 | -1 | -1 | -1 | -1 | -1 | -1 | -1 | -1 | -1 | 41 | 26 | 27 | 44 | -1 | -1 | -1 | -1 | -1 | -1 | -1 | -1 | -1 | -1 | -1 | -1 | -1 | 42 | 43 | 44 | -1 | -1 | -1 |
| 13 | -1 | -1 | -1 | -1 | -1 | -1 | -1 | -1 | -1 | -1 | -1 | 43 | 28 | 13 | 29 | 45 | -1 | -1 | -1 | -1 | -1 | -1 | -1 | -1 | -1 | -1 | 42 | 27 | 28 | 45 | -1 | -1 | -1 | -1 | -1 | -1 | -1 | -1 | -1 | -1 | -1 | -1 | -1 | 43 | 44 | 45 | -1 | -1 |
| 14 | 46 | -1 | -1 | -1 | -1 | -1 | -1 | -1 | -1 | -1 | -1 | -1 | 44 | 29 | 14 | 30 | -1 | -1 | -1 | -1 | -1 | -1 | -1 | -1 | -1 | -1 | -1 | 43 | 28 | 29 | 45 | -1 | -1 | -1 | -1 | -1 | -1 | -1 | -1 | -1 | -1 | -1 | -1 | -1 | 44 | 45 | 46 | -1 |
| 15 | 31 | 47 | -1 | -1 | -1 | -1 | -1 | -1 | -1 | -1 | -1 | -1 | 45 | 29 | 30 | 15 | 47 | -1 | -1 | -1 | -1 | -1 | -1 | -1 | -1 | -1 | -1 | -1 | 44 | 29 | 30 | 31 | -1 | -1 | -1 | -1 | -1 | -1 | -1 | -1 | -1 | -1 | -1 | -1 | -1 | 45 | 46 | 47 |
| 16 | 32 | 16 | 32 | -1 | -1 | -1 | -1 | -1 | -1 | -1 | -1 | -1 | -1 | -1 | 30 | 47 | 16 | 32 | -1 | -1 | -1 | -1 | -1 | -1 | -1 | -1 | -1 | -1 | -1 | 45 | 30 | 46 | 31 | -1 | -1 | -1 | -1 | -1 | -1 | -1 | -1 | -1 | -1 | -1 | -1 | -1 | -1 | 47 |
| 17 | -1 | 17 | 33 | 18 | -1 | -1 | -1 | -1 | -1 | -1 | -1 | -1 | -1 | -1 | 47 | -1 | 32 | 17 | 33 | -1 | -1 | -1 | -1 | -1 | -1 | -1 | -1 | -1 | 43 | 28 | 46 | -1 | 32 | 17 | 33 | -1 | -1 | -1 | -1 | -1 | -1 | -1 | 42 | 43 | -1 | -1 | -1 | -1 |
| 18 | -1 | -1 | 34 | 18 | 34 | -1 | -1 | -1 | -1 | -1 | -1 | -1 | -1 | -1 | -1 | -1 | -1 | 33 | 18 | 34 | -1 | -1 | -1 | -1 | -1 | -1 | -1 | -1 | -1 | -1 | -1 | -1 | 33 | 18 | 34 | -1 | -1 | -1 | -1 | -1 | -1 | -1 | -1 | -1 | -1 | -1 | -1 | -1 |
| 19 | -1 | -1 | 35 | 34 | 19 | 35 | -1 | -1 | -1 | -1 | -1 | -1 | -1 | -1 | -1 | -1 | -1 | 34 | 19 | 35 | -1 | -1 | -1 | -1 | -1 | -1 | -1 | -1 | -1 | -1 | -1 | -1 | 34 | 19 | 35 | -1 | -1 | -1 | -1 | -1 | -1 | -1 | -1 | -1 | -1 | -1 | -1 | -1 |
| 20 | -1 | -1 | -1 | 35 | 20 | 36 | -1 | -1 | -1 | -1 | -1 | -1 | -1 | -1 | -1 | -1 | -1 | -1 | 35 | 20 | 36 | -1 | -1 | -1 | -1 | -1 | -1 | -1 | -1 | -1 | -1 | -1 | -1 | 35 | 36 | -1 | -1 | -1 | -1 | -1 | -1 | -1 | -1 | -1 | -1 | -1 | -1 | -1 |
| 21 | -1 | -1 | -1 | -1 | 36 | 37 | -1 | -1 | -1 | -1 | -1 | -1 | -1 | -1 | -1 | -1 | -1 | -1 | -1 | 36 | 21 | 37 | -1 | -1 | -1 | -1 | -1 | -1 | -1 | -1 | -1 | -1 | -1 | -1 | 36 | 37 | -1 | -1 | -1 | -1 | -1 | -1 | -1 | -1 | -1 | -1 | -1 | -1 |
| 22 | -1 | -1 | -1 | 37 | -1 | 37 | -1 | -1 | -1 | -1 | -1 | -1 | -1 | -1 | -1 | -1 | -1 | -1 | -1 | -1 | 36 | 21 | 37 | -1 | -1 | -1 | -1 | -1 | -1 | -1 | -1 | -1 | -1 | -1 | -1 | 37 | 38 | -1 | -1 | -1 | -1 | -1 | -1 | -1 | -1 | -1 | -1 | -1 |
| 23 | -1 | -1 | -1 | -1 | 38 | 23 | 23 | 39 | -1 | -1 | -1 | -1 | -1 | -1 | -1 | -1 | -1 | -1 | -1 | -1 | -1 | 38 | 23 | 39 | -1 | -1 | -1 | -1 | -1 | -1 | -1 | -1 | -1 | -1 | -1 | -1 | 38 | 39 | -1 | -1 | -1 | -1 | -1 | -1 | -1 | -1 | -1 | -1 |
| 24 | -1 | -1 | -1 | -1 | -1 | 39 | 24 | 24 | 40 | -1 | -1 | -1 | -1 | -1 | -1 | -1 | -1 | -1 | -1 | -1 | -1 | 39 | 24 | 40 | 25 | -1 | -1 | -1 | -1 | -1 | -1 | -1 | -1 | -1 | -1 | -1 | -1 | 39 | 40 | -1 | -1 | -1 | -1 | -1 | -1 | -1 | -1 | -1 |
| 25 | -1 | -1 | -1 | -1 | 40 | 25 | 25 | 41 | -1 | -1 | -1 | -1 | -1 | -1 | -1 | -1 | -1 | -1 | -1 | -1 | -1 | -1 | 40 | 25 | 41 | -1 | -1 | -1 | -1 | -1 | -1 | -1 | -1 | -1 | -1 | -1 | -1 | -1 | 40 | 41 | -1 | -1 | -1 | -1 | -1 | -1 | -1 | -1 |
| 26 | -1 | -1 | -1 | -1 | 41 | 26 | 26 | 42 | -1 | -1 | -1 | -1 | -1 | -1 | -1 | -1 | -1 | -1 | -1 | -1 | -1 | -1 | -1 | 41 | 26 | 42 | -1 | -1 | -1 | -1 | -1 | -1 | -1 | -1 | -1 | -1 | -1 | -1 | -1 | 41 | 42 | -1 | -1 | -1 | -1 | -1 | -1 | -1 |
| 27 | -1 | -1 | -1 | -1 | -1 | 42 | 27 | 27 | 43 | -1 | -1 | -1 | -1 | -1 | -1 | -1 | -1 | -1 | -1 | -1 | -1 | -1 | -1 | -1 | 42 | 27 | 43 | -1 | -1 | -1 | -1 | -1 | -1 | -1 | -1 | -1 | -1 | -1 | -1 | -1 | 42 | 43 | -1 | -1 | -1 | -1 | -1 | -1 |
| 28 | -1 | -1 | -1 | -1 | -1 | -1 | 43 | 28 | 28 | 44 | -1 | -1 | -1 | -1 | -1 | -1 | -1 | -1 | -1 | -1 | -1 | -1 | -1 | -1 | -1 | 43 | 28 | 44 | -1 | -1 | -1 | -1 | -1 | -1 | -1 | -1 | -1 | -1 | -1 | -1 | -1 | 43 | 44 | -1 | -1 | -1 | -1 | -1 |
| 29 | -1 | -1 | -1 | -1 | -1 | -1 | -1 | 44 | 29 | 29 | 45 | -1 | -1 | -1 | -1 | -1 | -1 | -1 | -1 | -1 | -1 | -1 | -1 | -1 | 44 | 29 | 45 | -1 | -1 | -1 | -1 | -1 | -1 | -1 | -1 | -1 | -1 | -1 | -1 | -1 | -1 | 44 | 29 | 45 | -1 | -1 | -1 | -1 |
| 30 | -1 | -1 | -1 | -1 | -1 | -1 | -1 | -1 | 45 | 29 | 30 | 46 | -1 | -1 | -1 | -1 | -1 | -1 | -1 | -1 | -1 | -1 | -1 | -1 | -1 | 45 | 29 | 30 | 46 | -1 | -1 | -1 | -1 | -1 | -1 | -1 | -1 | -1 | -1 | -1 | -1 | -1 | 45 | 30 | 46 | -1 | -1 | -1 |
| 31 | -1 | -1 | -1 | -1 | -1 | -1 | -1 | -1 | -1 | 46 | 30 | 31 | 47 | -1 | -1 | -1 | -1 | -1 | -1 | -1 | -1 | -1 | -1 | -1 | -1 | -1 | 46 | 30 | 31 | 47 | -1 | -1 | -1 | -1 | -1 | -1 | -1 | -1 | -1 | -1 | -1 | -1 | -1 | 46 | 31 | 47 | -1 | -1 |
| 32 | -1 | -1 | 32 | 33 | -1 | -1 | -1 | -1 | -1 | -1 | -1 | -1 | -1 | -1 | -1 | -1 | -1 | -1 | -1 | -1 | -1 | -1 | -1 | -1 | -1 | -1 | -1 | -1 | -1 | -1 | 32 | 33 | -1 | -1 | -1 | -1 | -1 | -1 | -1 | -1 | -1 | -1 | -1 | -1 | -1 | -1 | -1 | -1 |
| 33 | -1 | -1 | 33 | 33 | -1 | -1 | -1 | -1 | -1 | -1 | -1 | -1 | -1 | -1 | -1 | -1 | -1 | -1 | -1 | -1 | -1 | -1 | 33 | 33 | -1 | -1 | -1 | -1 | -1 | -1 | -1 | 33 | 33 | -1 | -1 | -1 | -1 | -1 | -1 | -1 | -1 | -1 | -1 | -1 | -1 | -1 | -1 | -1 |
| 34 | -1 | -1 | 34 | 34 | 34 | -1 | -1 | -1 | -1 | -1 | -1 | -1 | -1 | -1 | -1 | -1 | -1 | -1 | -1 | -1 | -1 | -1 | 34 | 34 | -1 | -1 | -1 | -1 | -1 | -1 | -1 | 34 | 34 | -1 | -1 | -1 | -1 | -1 | -1 | -1 | -1 | -1 | -1 | -1 | -1 | -1 | -1 | -1 |
| 35 | -1 | -1 | -1 | 35 | 35 | 35 | -1 | -1 | -1 | -1 | -1 | -1 | -1 | -1 | -1 | -1 | -1 | -1 | -1 | -1 | -1 | -1 | -1 | 35 | -1 | -1 | -1 | -1 | -1 | -1 | -1 | 35 | -1 | -1 | -1 | -1 | -1 | -1 | -1 | -1 | -1 | -1 | -1 | -1 | -1 | -1 | -1 | -1 |
| 36 | -1 | -1 | -1 | -1 | 36 | 36 | 36 | -1 | -1 | -1 | -1 | -1 | -1 | -1 | -1 | -1 | -1 | -1 | -1 | -1 | -1 | -1 | -1 | -1 | 36 | -1 | -1 | -1 | -1 | -1 | -1 | 36 | -1 | -1 | -1 | -1 | -1 | -1 | -1 | -1 | -1 | -1 | -1 | -1 | -1 | -1 | -1 | -1 |
| 37 | -1 | -1 | -1 | -1 | -1 | 37 | 37 | 37 | -1 | -1 | -1 | -1 | -1 | -1 | -1 | -1 | -1 | -1 | -1 | -1 | -1 | -1 | -1 | -1 | -1 | 37 | -1 | -1 | -1 | -1 | 37 | 37 | -1 | -1 | -1 | -1 | -1 | -1 | -1 | -1 | -1 | -1 | -1 | -1 | -1 | -1 | -1 | -1 |
| 38 | -1 | -1 | -1 | -1 | -1 | -1 | 38 | 38 | 38 | -1 | -1 | -1 | -1 | -1 | -1 | -1 | -1 | -1 | -1 | -1 | -1 | -1 | -1 | -1 | -1 | -1 | -1 | -1 | -1 | 38 | 38 | -1 | -1 | -1 | -1 | -1 | -1 | -1 | -1 | -1 | -1 | -1 | -1 | -1 | -1 | -1 | -1 | -1 |
| 39 | -1 | -1 | -1 | -1 | -1 | -1 | -1 | 39 | 39 | 39 | -1 | -1 | -1 | -1 | -1 | -1 | -1 | -1 | -1 | -1 | -1 | -1 | -1 | -1 | -1 | -1 | -1 | -1 | 39 | 39 | -1 | -1 | -1 | -1 | -1 | -1 | -1 | -1 | -1 | -1 | -1 | -1 | -1 | -1 | -1 | -1 | -1 | -1 |
| 40 | -1 | -1 | -1 | -1 | -1 | -1 | -1 | -1 | 40 | 40 | 40 | -1 | -1 | -1 | -1 | -1 | -1 | -1 | -1 | -1 | -1 | -1 | -1 | -1 | -1 | -1 | -1 | 40 | 40 | -1 | -1 | -1 | -1 | -1 | -1 | -1 | -1 | -1 | -1 | -1 | -1 | -1 | -1 | -1 | -1 | -1 | -1 | -1 |
| 41 | -1 | -1 | -1 | -1 | -1 | -1 | -1 | -1 | -1 | 41 | 41 | 41 | -1 | -1 | -1 | -1 | -1 | -1 | -1 | -1 | -1 | -1 | -1 | -1 | -1 | -1 | 41 | 41 | -1 | -1 | -1 | -1 | -1 | -1 | -1 | -1 | -1 | -1 | -1 | -1 | -1 | -1 | -1 | -1 | -1 | -1 | -1 | -1 |
| 42 | -1 | -1 | -1 | -1 | -1 | -1 | -1 | -1 | -1 | -1 | 42 | 42 | 42 | -1 | -1 | -1 | -1 | -1 | -1 | -1 | -1 | -1 | -1 | -1 | -1 | 42 | 42 | -1 | -1 | -1 | -1 | -1 | -1 | -1 | -1 | -1 | -1 | -1 | -1 | -1 | -1 | -1 | -1 | -1 | -1 | -1 | -1 | -1 |
| 43 | -1 | -1 | -1 | -1 | -1 | -1 | -1 | -1 | -1 | -1 | -1 | 43 | 43 | 43 | -1 | -1 | -1 | -1 | -1 | -1 | -1 | -1 | -1 | -1 | 43 | 43 | -1 | -1 | -1 | -1 | -1 | -1 | -1 | -1 | -1 | -1 | -1 | -1 | -1 | -1 | -1 | -1 | -1 | -1 | -1 | -1 | -1 | -1 |
| 44 | -1 | -1 | -1 | -1 | -1 | -1 | -1 | -1 | -1 | -1 | -1 | -1 | 44 | 44 | 44 | -1 | -1 | -1 | -1 | -1 | -1 | -1 | -1 | 44 | 44 | -1 | -1 | -1 | -1 | -1 | -1 | -1 | -1 | -1 | -1 | -1 | -1 | -1 | -1 | -1 | -1 | -1 | -1 | 44 | 44 | -1 | -1 | -1 |
| 45 | -1 | -1 | -1 | -1 | -1 | -1 | -1 | -1 | -1 | -1 | -1 | -1 | -1 | 45 | 45 | 45 | -1 | -1 | -1 | -1 | -1 | -1 | 45 | 45 | -1 | -1 | -1 | -1 | -1 | -1 | -1 | -1 | -1 | -1 | -1 | -1 | -1 | -1 | -1 | -1 | -1 | -1 | -1 | 45 | 45 | 45 | -1 | -1 |
| 46 | -1 | 45 | -1 | -1 | -1 | -1 | -1 | -1 | -1 | -1 | -1 | -1 | -1 | -1 | 46 | 46 | 46 | -1 | -1 | -1 | -1 | 46 | 46 | -1 | -1 | -1 | -1 | -1 | -1 | -1 | -1 | 46 | -1 | -1 | -1 | -1 | -1 | -1 | -1 | -1 | -1 | -1 | -1 | 46 | 46 | 46 | -1 | 46 |
| 47 | -1 | 46 | -1 | -1 | -1 | -1 | -1 | -1 | -1 | -1 | -1 | -1 | -1 | -1 | -1 | 47 | 47 | 47 | -1 | -1 | -1 | 47 | 47 | -1 | -1 | -1 | -1 | -1 | -1 | -1 | 47 | -1 | -1 | -1 | -1 | -1 | -1 | -1 | -1 | -1 | -1 | -1 | -1 | -1 | 47 | 47 | -1 | 47 |

Tel que cela ressort de l'analyse du tableau ci-dessus, une connexion entre deux points contours est déclarée valide non seulement si les valeurs de l'orientation des gradients de ces points contours sont identiques, mais également si ces valeurs sont "proches", avec une notion de tolérance concernant cette "proximité" pouvant évoluer au fur et à mesure des connexions de points contours d'un même segment selon le principe suivant. Au départ, tous les points contours sont identifiés par une orientation θ de leur gradient présentant une valeur comprise entre 0 et 15 représentative du secteur du cercle trigonométrique correspondant à cette orientation. Par la suite, les valeurs θ inscrites dans les registres de travail représentatives de ces orientations évoluent au fur et à mesure des connexions effectuées de la manière suivante :

- dans le cas idéal où l'orientation du segment reste constante, θ garde la valeur de départ comprise entre 0 et 15,
- si les orientations des points contours sont situées dans des secteurs voisins, le θ résultant prend une valeur comprise entre 16 et 31. Lors de la connexion suivante réalisée sur la base de cette nouvelle valeur, la tolérance se trouve automatiquement diminuée,
- si les orientations des points contours sont situées dans des secteurs séparés par un secteur intermédiaire, le θ résultant prend une valeur comprise entre 32 et 47. Lors de la connexion suivante, la tolérance se trouve encore automatiquement diminuée.

Une fois la connexion entre deux points contours validée, deux types de traitement peuvent être appliqués, selon que la connexion est de type "classique" telle qu'explicitée ci-dessous, ou qu'elle relie deux points appartenant à une ligne horizontale ou pratiquement horizontale.

En premier lieu, lors du traitement du point courant Pc (figure 2), une connexion est de type "classique" lorsqu'elle correspond à une connexion entre un segment S1, de taille supérieure ou égale à 1, dont l'extrémité finale est située dans la ligne précédente et dont les coordonnées sont inscrites dans un des points Pa ou Pb, et un segment S2 de taille 1 constitué du point courant Pc ou du point Pd.

Dans ce cas, le traitement consiste à transférer dans le point contour Pc ou Pd formant le segment S2, les coordonnées inscrites dans le point Pa ou Pb correspondant à l'extrémité finale du segment S1, puis à effacer de la mémoire les coordonnées, dit point Pa ou Pb. De la sorte, on obtient par connexions successives un segment de droite S dont l'extrémité finale "pointe" sur l'extrémité origine.

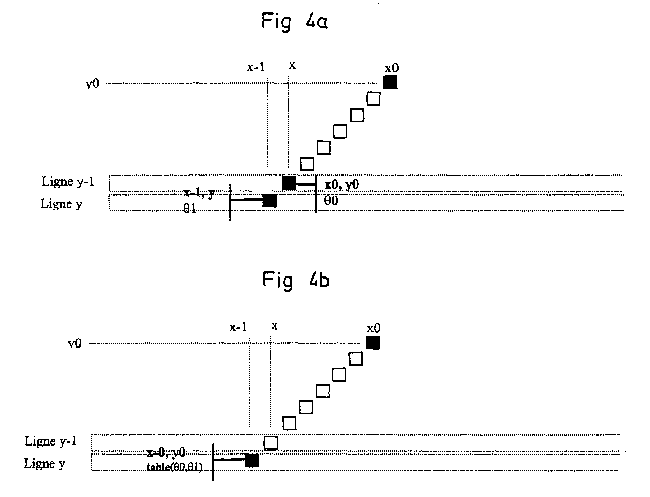

L'exemple représenté aux figures 4a et 4b ci-dessous illustre la connexion entre un segment S1 ayant pour point origine P(x0,y0) et un point contour P(x-1,y), cette connexion correspondant à la configuration d - b si l'on se réfère à la figure 2.

Selon cet exemple, une fois la connexion entre les points Pb(x0,y0) et Pd(x- 1,y) détectée (figure 4a), les coordonnées de Pb sont inscrites en Pd et le point Pb effacé. On peut alors traiter le point suivant en incrémentant la valeur de x, puis celle de y une fois la ligne finie.

Toutefois, dans le cas du traitement d'une telle connexion de type classique, l'extrémité finale du segment S1 n'est plus mise à jour par l'algorithme car elle est située dans un point de l'image qui ne sera plus examiné. Or, cette mise à jour est nécessaire dans le cas de lignes horizontales ou pratiquement horizontales qui imposent de mettre à jour les deux extrémités du segment du fait que celles-ci sont toutes deux susceptibles d'être connectées à un autre segment de taille x ≥ 1 situé dans la ligne suivante.

Ainsi, lors d'une connexion entre un segment S de taille x≥1 et un point courant situés sur une même ligne (configuration d - c si l'on se réfère à la figure 2), le traitement consiste à inscrire dans le point origine du segment S les coordonnées du point courant et inversement les coordonnées du point origine dans celles du point courant, les coordonnées des points intermédiaires éventuels étant effacées.

Il est alors possible de connecter un segment de droite horizontal localisé dans une ligue j avec un point contour (équivalent à un segment de taille 1) ou un segment de droite horizontal localisés dans l'une des ligues j-1 ou j+1 :

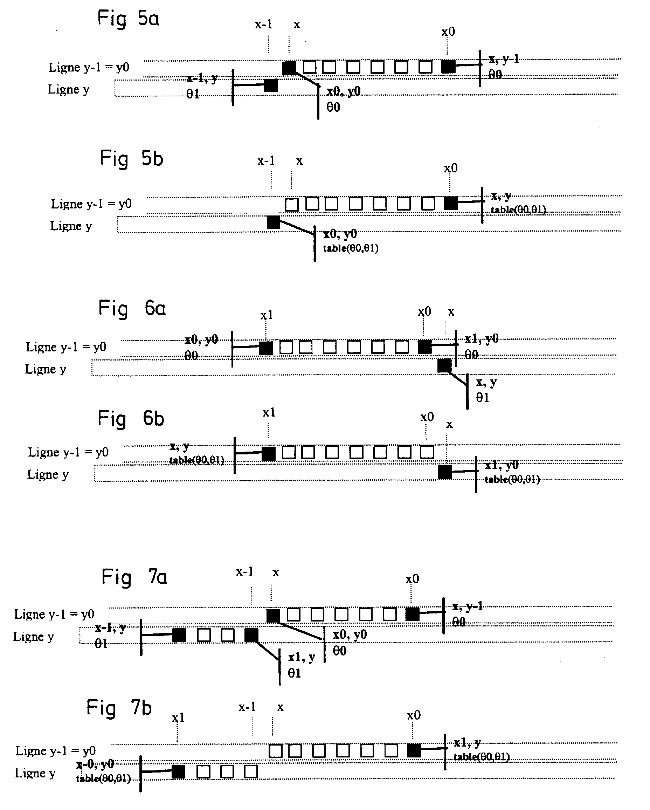

- lors de la connexion entre un segment de droite horizontal et un point contour situé dans une ligne adjacente, et tel qu'illustré dans les deux exemples représentés respectivement aux figures 5a, 5b et 6a, 6b, les coordonnées du point contour sont inscrites dans le point d'extrémité du segment de droite situé à l'opposé du point de connexion, et celles dudit point d'extrémité inscrites dans le point contour.
- lors de la connexion ente deux segments de droites horizontaux, et tel qu'illustré dans l'exemple représenté aux figures 7a, 7b, les coordonnées des deux points connectés desdits segments sont effacées, et on ne conserve que les extrémités du segment résultant "pointant" l'une vers l'autre.

Une fois le traitement du point courant Pc effectué selon le processus ci-dessus explicité et les mémoires lignes mises à jour, l'étape suivante consiste à établir si, parmi les quatre points lus Pa, Pb, Pc, Pd (tels que représentés à la figure 2), seul le point Pa est un point contour, cette condition permettant d'établir que ledit point Pa constitue l'extrémité d'un segment de droite.

Dans l'affirmative, on compare la taille du segment de droite à un seuil mémorisé, et on procède à la sauvegarde, par la mise à jour des registres résultats, des coordonnées du point origine et du point final, et de l'orientation dudit segment de droite si sa taille est supérieure à un seuil dont la valeur est fonction de l'application.

Le dispositif de détection comprend, enfin, un module de calcul 6 programmé, à partir des informations mémorisées dans le circuit-tampon 3, pour calculer l'histogramme des orientations des différents segments de droites détectés.

## Revendications

1. Procédé de détection de segments de droites dans un flot de données numériques représentatives d'une image (m, n) dans lequel sont identifiés les points contours de ladite image définis chacun par le module et l'orientation θ de leur gradient par rapport à un axe horizontal, ledit procédé étant caractérisé en ce qu'on mémorise le flot de données numériques sous la forme de deux lignes successives de n points P(i,j) chacune, avec $1 \leq i \leq m$ et $1 \leq j \leq n$, et pour chacune des lignes, on extrait successivement les n points de ladite ligne et pour chaque point Pc(i,j) extrait, dit point courant :

   - on extrait les trois points de coordonnées inférieures Pa (i-1,j-1), Pb(i,j-1), Pd (i-1,j) voisins directs dudit point courant,
   - on compare successivement la valeur de l'orientation du gradient du point courant Pc avec celle des points voisins Pa, Pb, et Pd, et les valeurs des orientations des gradients des points Pb et Pd,
   - on valide le résultat d'une comparaison, représentatif d'une connexion entre deux points, si lesdits points sont des points contours, et si la différence entre les valeurs de l'orientation de leur gradient est inférieure ou égale à une valeur k prédéterminée,
   - lorsque le résultat d'une comparaison est validé, on recopie les coordonnées du point de coordonnées inférieures de la connexion, dit point de début, dans celles du point de coordonnées supérieures, dit point de fin, de ladite connexion, et l'on efface de la mémoire les coordonnées du point de début sauf si ce dernier a été identifié comme étant un point origine d'un segment de droite.

     . on vérifie si seul le point Pa (i-1,j-1) est un point contour parmi les quatre points Pa, Pb, Pc, Pd extraits, et dans l'affirmative, on calcule la taille du segment de droite dont ledit point Pa est le point final, et on sauvegarde les coordonnées du point origine et du point final, et l'orientation dudit segment de droite si sa taille est supérieure à un seuil prédéterminé.

2. Procédé de détection selon la revendication 1, caractérisé en ce que :

   - lors de la validation d'une première connexion entre deux points voisins P(i-1,j), P(i,j) d'une même ligne, représentative d'un segment initial de droite horizontal, on remplace les coordonnées du point de début de la connexion par celles du point de fin de ladite connexion, et inversement celles du point de fin par celles du point de début.
   - puis, pour tout point P(i+x,j) de ladite ligne connecté au segment de droite initial, on remplace les coordonnées dudit point par les coordonnées initiales (i-1,j) du point origine du segment initial de droite horizontal et les coordonnées dudit point origine par celles (i+x,j) dudit point.

3. Procédé de détection selon la revendication 2, caractérisé en ce que lors de la validation de la connexion entre un point P(i,j) avec un point P(i-1,j-1) ou P(i+1,j-1) validé comme un point d'extrémité, origine ou final, d'un segment de droite horizontal, les coordonnées dudit point P(i,j) sont transférées dans celles du point d'extrémité opposée, final ou origine, dudit segment de droite, et celles dudit point d'extrémité opposée dans celles dudit point P(i,j).

4. Procédé de détection selon l'une des revendications précédentes, caractérisé en ce que l'on calcule l'histogramme des orientations des différents segments de droite détectés dans l'image.

5. Procédé de détection selon l'une des revendications précédentes, caractérisé en ce que les points contours de l'image (m,n) initiale sont définis par des valeurs de l'orientation du gradient comprises entre 0 et 15 obtenues par une division du cercle trigonométrique en 16 secteurs égaux, et représentatives chacune d'une position angulaire comprise dans un desdits secteurs.

6. Procédé de détection selon la revendication 5, caractérisé en ce que l'on valide une connexion entre deux points contours au moyen du tableau ci-après :

l'utilisation du tableau consistant, d'une part à déclarer valide la connexion lorsque la donnée dans ledit tableau correspondant à l'intersection des valeurs des orientations θ1, θ2 des deux points contours est différente de -1, et d'autre part, à conférer au point de fin de la connexion une valeur d'orientation égale à celle de ladite donnée.

**7.** Procédé de détection selon l'une des revendications précédentes, caractérisé en ce que l'on mémorise le flot de données numériques dans une mémoire comportant trois blocs-mémoires d'une capacité de n points chacun, aptes à permettre par permutation circulaire desdits blocs-mémoires, le stockage de n points dans un bloc-mémoire, et simultanément le traitement des données renfermées dans les deux autres blocs-mémoires.

**8.** Dispositif de détection de segments de droites dans un flot de données numériques délivrées avec une fréquence pixel et représentatives d'une image (m,n), dans lequel sont identifiés les points contours de ladite image, caractérisé en ce qu'il comprend :

- des moyens (1) de mémorisation du flot de données numériques sous forme de lignes successives de n données chacune,
- un circuit-tampon (3) comprenant :

  . des registres de lecture successive des données numériques à traiter,
  . des registres de mémorisation des résultats du traitement des données numériques représentatifs des coordonnées des points d'extrémité et de l'orientation des segments de droite,
  . et des registres de travail,

- un module de gestion (2) recevant un signal d'horloge représentatif de la fréquence pixel de délivrance des données numériques, ledit module de gestion étant relié aux moyens de mémorisation (1) et au circuit tampon (3), et étant adapté d'une part, pour gérer le remplissage et le traitement à la fréquence pixel des données numériques dans les moyens de mémorisation (1), et d'autre part, l'échange réciproque de données entre lesdits moyens de mémorisation et le circuit-tampon (3),
- un module de calcul (4) programmé pour effectuer des tests destinés au traitement des données numériques dans les registres de lecture,
- et un séquenceur (5) recevant un signal d'horloge représentatif de la fréquence pixel et adapté, en fonction des résultats délivrés par le module de calcul (4) pour commander le module de gestion (2) et le circuit-tampon (3) en vue des transferts de données entre ledit circuit-tampon et les moyens de mémorisation (1).

**9.** Dispositif de détection selon la revendication 8, caractérisé en ce que les moyens de mémorisation (1) comprennent trois blocs-mémoires aptes à mémoriser chacun une ligne de n données numériques, le module de gestion (2) étant adapté pour commander une permutation circulaire desdits blocs mémoires apte à permettre le stockage n données dans un bloc-mémoire, et simultanément, le traitement des données renfermées dans les deux autres blocs-mémoires.

**10.** Dispositif de détection selon l'une des revendications 8 ou 9, caractérisé en ce qu'il comprend un module de calcul (6) recevant les résultats mémorisés dans les registres de mémorisation, représentatifs des orientations des segments de droites détectés, et programmé pour calculer l'histogramme desdites orientations.

Fig 1

## Fig 2

## Fig 3

## Fig 4a

## Fig 4b

Fig 5a

x-1    x                          x0

Ligne y-1 = y0 .................................................. □ □ □ □ □ □ ■ | **x, y-1** θ0

Ligne y ............... **x-1, y** θ1 ......... ■ ........ **x0, y0** θ0

Fig 5b

x-1    x                          x0

Ligne y-1 = y0 .................................................. □ □ □ □ □ □ ■ | **x, y** table(θ0,θ1)

Ligne y ............................ ■ ......... **x0, y0** table(θ0,θ1)

Fig 6a

x1                          x0    x

Ligne y-1 = y0 ...... **x0, y0** θ0 ..... ■ □ □ □ □ □ ■ | **x1, y0** θ0

Ligne y ............................................. ■ ........ **x, y** θ1

Fig 6b

x1                          x0    x

Ligne y-1 = y0 ...... **x, y** table(θ0,θ1) ..... ■ □ □ □ □ □ □ ........ **x1, y0** table(θ0,θ1)

Ligne y ............................................. ■ ........ **x1, y0** table(θ0,θ1)

Fig 7a

x-1    x                          x0

Ligne y-1 = y0 .................... ■ □ □ □ □ □ ■ | **x, y-1** θ0

Ligne y ......... **x-1, y** θ1 ...... ■ □ □ ■ ...... **x0, y0** θ0 ...... **x1, y** θ1

Fig 7b

x1    x-1    x                          x0

Ligne y-1 = y0 .................... □ □ □ □ □ ■ | **x1, y** table(θ0,θ1)

Ligne y ... **x-0, y0** table(θ0,θ1) ... ■ □ □ □ ......................................

15

## EP 1 022 680 A1

Office européen
des brevets

## RAPPORT DE RECHERCHE EUROPEENNE

Numéro de la demande

EP 00 39 0002

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | HEMDAL J F: "One-dimensional digital processing of images for straight-line detection" PATTERN RECOGNITION, vol. 31, no. 11, 1 novembre 1998 (1998-11-01), page 1687-1690 XP004134416 ISSN: 0031-3203 * abrégé * | 1,8 | G06T7/00 G06K9/46 |
| A | US 5 301 115 A (NOUSO KAZUNORI) 5 avril 1994 (1994-04-05) * abrégé * | 1,8 | |
| A | WO 92 11609 A (OPTICAL SPECIALITIES INC) 9 juillet 1992 (1992-07-09) * abrégé * | 1,8 | |
| A | US 5 378 881 A (ADACHI YUTAKA) 3 janvier 1995 (1995-01-03) * abrégé * | 1,8 | |
| A | CHERRI A K ET AL: "OPTICAL SYMBOLIC SUBSTITUTION: EDGE DETECTION USING PREWITT, SOBEL,AND ROBERTS OPERATORS" APPLIED OPTICS, vol. 28, no. 21, 1 novembre 1989 (1989-11-01), pages 4644-4648, XP000071204 ISSN: 0003-6935 * alinéas [00II],[],[0IIC]; tableau IV * | | DOMAINES TECHNIQUES RECHERCHES (Int.Cl.7) G06T G06K B07C G07G |

Le présent rapport a été établi pour toutes les revendications

| Lieu de la recherche | Date d'achèvement de la recherche | Examinateur |
|---|---|---|
| BERLIN | 10 mars 2000 | Jonsson, P.O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

16

EP 1 022 680 A1

**ANNEXE AU RAPPORT DE RECHERCHE EUROPEENNE
RELATIF A LA DEMANDE DE BREVET EUROPEEN NO.**

EP 00 39 0002

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-03-2000

| Document brevet cité au rapport de recherche | Date de publication | Membre(s) de la famille de brevet(s) | | Date de publication |
|---|---|---|---|---|
| US 5301115 A | 05-04-1994 | JP | 2754871 B | 20-05-1998 |
| | | JP | 4036878 A | 06-02-1992 |
| WO 9211609 A | 09-07-1992 | AUCUN | | |
| US 5378881 A | 03-01-1995 | JP | 5334479 A | 17-12-1993 |
| | | CN | 1079321 A,B | 08-12-1993 |

EPO FORM P0460

Pour tout renseignement concernant cette annexe : voir Journal Officiel de l'Office européen des brevets, No.12/82

17